# EUROPEAN PATENT APPLICATION

(11) **EP 4 588 836 A1**
(43) Date of publication of application: **23.07.2025**
(21) Application number: 24153040.1
(22) Date of filing: 22.01.2024
(51) Int. Cl.: B65G 1/04, B65G 1/06, B66F 9/06, B66F 9/07

(54) **A VEHICLE FOR HANDLING STACKER FRAMES**

(71) Applicant: AUTOSTORE TECHNOLOGY AS, 5578 Nedre Vats (NO)
(72) Inventor: Heggebø, Jørgen, 5578 Nedre Vats (NO)
(74) Representative: Kilburn & Strode LLP

(57) **Abstract**

A vehicle for handling stacker frames configured to be stored in storage columns of an automated storage and retrieval system is proposed, the stacker frames configured to accommodate a plurality of storage containers stored one on top of another in a vertical stack in an interior space of the stacker frame, the stacker frame handling vehicle comprising wheels for moving the vehicle, a cavity inside the vehicle body, a stacker frame lifter arranged in the cavity and configured to lift a stacker frame into and out of the cavity, and a stacker frame lifter displacement device configured to move the stacker frame lifter in a horizontal direction within the cavity.

## Description

### TECHNICAL FIELD

The present invention relates to an automated storage and retrieval system for storage and retrieval of containers, in particular to a vehicle for handling stacker frames configured to be stored in storage columns of an automated storage and retrieval system, to an assembly comprising a stacker frame and such a vehicle, to an automated storage and retrieval system having such a vehicle, as well as to a method for operating such a vehicle.

### BACKGROUND

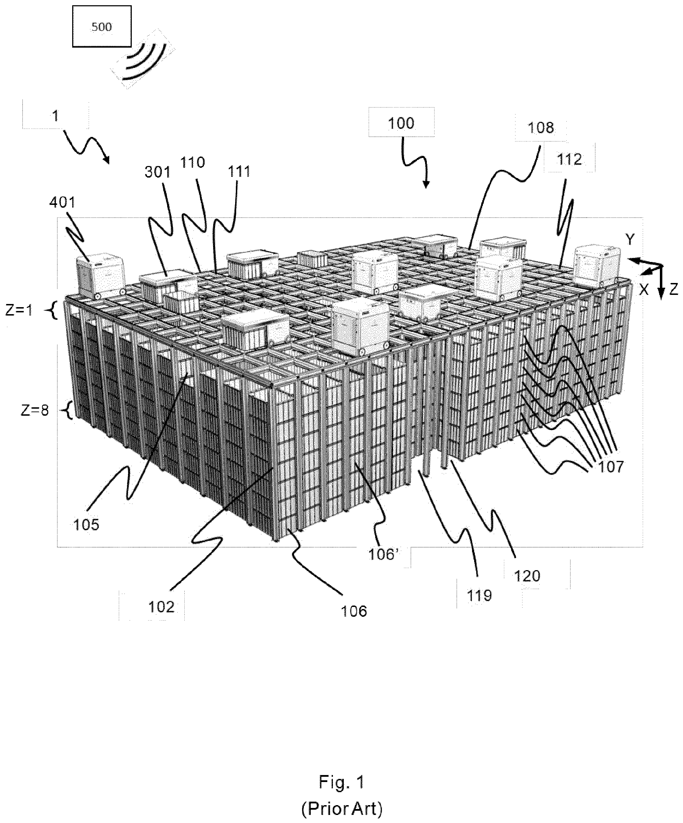

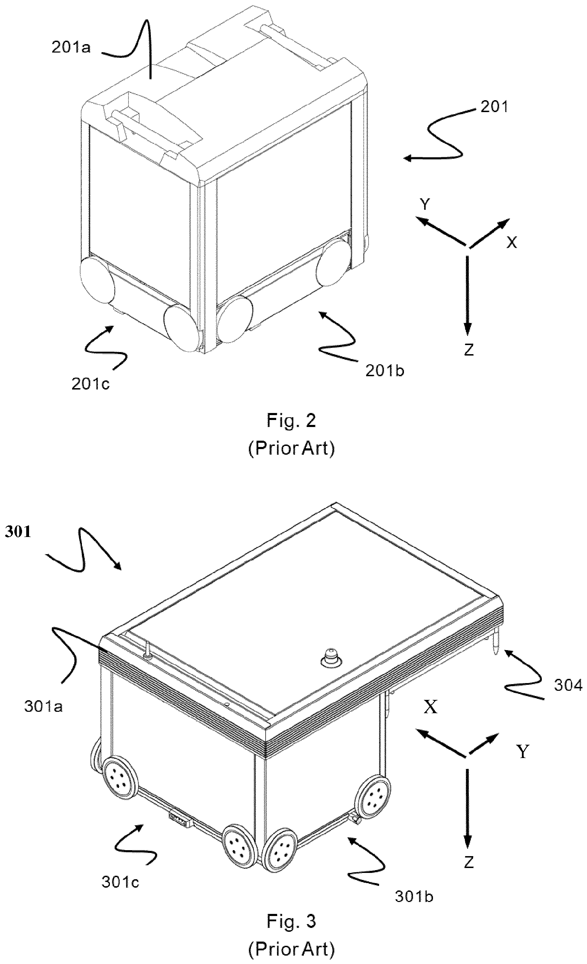

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X*. Containers 106 stored in the columns 105 are accessed by the container handling vehicles 201,301,401 through access openings 112 in the rail system 108. The container handling vehicles 201,301,401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

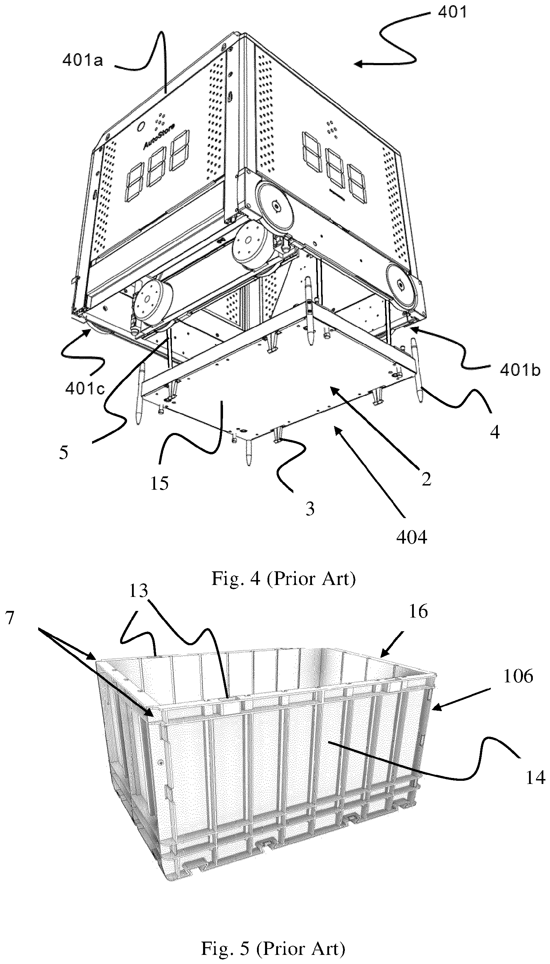

Each prior art container handling vehicle 201,301,401 also comprises a lifting device for vertical transportation of storage containers 106, e.g. raising a storage container 106 from, and lowering a storage container 106 into, a storage column 105. The lifting device comprises one or more gripping / engaging devices which are adapted to engage a storage container 106, and which gripping / engaging devices can be lowered from the vehicle 201,301,401 so that the position of the gripping / engaging devices with respect to the vehicle 201,301,401 can be adjusted in a third direction *Z* which is orthogonal the first direction *X* and the second direction *Y*. Parts of the gripping device of the container handling vehicles 301,401 are shown in Figs. 3 and 4 indicated with reference number 304,404. The gripping device of the container handling device 201 is located within the vehicle body 201a in Fig. 2 and is thus not shown.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X*, *Y*, *Z* indicated in Fig. 1, the storage container identified as 106' in Fig. 1 can be said to occupy storage position *X*=17, *Y*=1*, Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an *X-* and *Y*-direction, while each storage cell may be identified by a container number in the *X*-, *Y*- and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term `lateral' used herein may mean `horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns are storage columns 105, i.e. columns 105 where storage containers 106 are stored in stacks 107. In addition to storage columns 105, there are special-purpose columns within the framework structure. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a "port" and the column in which the port is located may be referred to as a "port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term "tilted" means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

The prior art storage systems are restricted regarding the height of the stacks of storage containers by the practical lifting height of the container handling vehicles and/or the weight that may be supported by the lower storage container in a stack of storage containers. Further, a storage system in which the storage container may be rearranged more efficiently would be advantageous. In addition, moving a plurality of storage containers usually requires handling the plurality of storage containers one by one.

It may be an object of the invention to provide a vehicle which is capable of moving a plurality of storage containers quickly.

### SUMMARY

According to a first aspect, there is provided a vehicle for handling stacker frames configured to be stored in storage columns of an automated storage and retrieval system, the stacker frames configured to accommodate a plurality of storage containers stored one on top of another in a vertical stack in an interior space of the stacker frame, the stacker frame handling vehicle comprising wheels for moving the vehicle, , a cavity inside the vehicle body, a stacker frame lifter arranged in the cavity and configured to lift a stacker frame into and out of the cavity, and a stacker frame lifter displacement device configured to move a stacker frame lifter in a horizontal direction within the cavity.

The stacker frame is to be understood as a frame or box, in which a group of storage containers can be stacked one on top of another. The stacker frame itself is storable in the framework structure of the automated storage and retrieval system. The stacker frame may be liftable and lowerable by the vehicle according to the invention and other robotic vehicles. The stacker frame concept allows a plurality of storage containers to be combined into a single, handleable unit, thereby accelerating the handling of a group of storage containers. The size of the stacker frame can be chosen according to specific storage system requirements of the operator of the automated storage and retrieval system. The stacker frame may be configured to receive one, two, three, four, five or more storage containers. The arrangement of a stacker frame and storage containers stacked inside the stacker frame may be referred to as a "nested stack".

The stacker frame may have side walls, a base, and an open top end, through which storage containers can be introduced or removed. The side walls and the base do not need to have a closed surface. They may be designed as closed receptacles that may optionally be equipped with a lid. They may be formed as gas-tight receptacles, which allows to shield the storage containers arranged inside the interior space from the exterior of the stacker frame. They may be thermally insulated. As an alternative, they may also be formed as a receptacle having partially open sides and/or a partially open base, thereby allowing air to pass through the interior space of the stacker frame and to reduce weight of the stacker frame.

The stacker frame may be equipped with several optional features according to the requirements of the operator of the automated storage and retrieval system. For example, the interior space may be thermally controlled, or actively ventilated. The air inside the interior space may be conditioned in any other desired way, e.g. humidified or adjusted in its composition.

The storage containers may comprise outer dimensions, i.e. width, length, and height, that correspond to the dimensions of common storage containers used in grid-based automated storage and retrieval systems. The interior dimensions may be e.g. 600 × 400 mm (length × width) and may have various heights, for example 200 mm, 310 mm, or 400 mm. The storage containers may comprise a top rim that completely surrounds a top opening of the storage containers. The top rim may comprise several apertures or openings for receiving or passing through gripping devices of a lifting frame of a remotely operated vehicle. The top opening of the storage container allows items to be placed into the interior space or to be removed therefrom.

However, smaller storage containers may also be used, for example with half the size, a third of the size, or a quarter of the size, and so on, of a common storage container. These smaller storage containers could be arranged adjacent to each other in one or more layers, wherein one layer may correspond to the footprint of a common storage container. Gaps may remain between adjacent smaller storage containers, thereby supporting an air flow through the layer of smaller storage containers.

The vehicle is capable of lifting and lowering stacker frames stored in storage columns of the automated storage and retrieval system and of moving the stacker frames on the rail system. Preferably, the vehicle is configured to be controlled by a control system of the automated storage and retrieval system to move on the rail system from one position to another position, to lower a stacker frame gripper, or another suitable device for retrieving a stacker frame, into a storage column at a given position, to engage the stacker frame gripper with a stacker frame arranged in the respective storage column and to lift the stacker frame gripper together with the respective stacker frame in an upward direction. The stacker frame may be lifted to a position at least slightly above the rail system. Then, the vehicle is able move the stacker frame to another position. The general design of the vehicle may correspond to the general design of a common load handling vehicle used in a grid-based automated storage and retrieval system.

Optionally, the vehicle includes a first set of wheels arranged at first opposite sides of a vehicle body for moving the vehicle in a first direction (X), a second set of wheels arranged at second opposite sides of the vehicle body, for moving the vehicle in a second direction (Y), orthogonal to the first direction, the first set of wheels being displaceable in a vertical direction (Z) between a first position, wherein the first set of wheels allow movement of the vehicle in the first direction (X), and a second position, wherein the second set of wheels allow movement of the vehicle in the second direction (Y).

The vehicle may be capable of moving on a rail system of an automated storage and retrieval system by means of the first and second sets of wheels as described further above in relation to prior art load handling vehicles. The wheels are used for conducting a lateral movement of the vehicle in a first direction or a second direction, which is orthogonal to the first direction. This is achieved by selectively engaging either the first set of wheels with two adjacent rails of a first set of rails of the rail system, or the second set of wheels with two adjacent rails of a second set of rails. The first set of rails and the second set of rails are arranged orthogonal to each other. At least one of the sets of wheels can be lifted and lowered, so that the first set of wheels and/or the second set of wheels can be engaged with the respective set of rails at any one time.

The stacker frame lifter may correspond to a lifting device for storage containers. For example, it may comprise a plurality, e.g. four, lifting bands, which are windably/winchably held on one or more lifting shafts. Free ends of the lifting bands that are opposite the lifting shafts when the lifting bands are not completely wound up, may be attached to the above-mentioned stacker frame gripper or a similar device for retrieving a stacker frame. By rotating the respective lifting shaft(s) through a motor, the lifting bands can be wound up or wound off, such that the free ends of the lifting bands move upwards or downwards. Consequently, driving the lifting shafts moves the stacker frame gripper upwards or downwards. Other variants are not excluded herein, and any form of lifting device may be used to lift or lower a stacker frame gripper.

The cavity inside the vehicle body serves for temporarily receiving stacker frames lifted by the stacker frame lifter from a storage column. The lifted stacker frames may be held inside the cavity during a motion of the vehicle on the rail system. Hence, a bottom side of the stacker frames lifted into the cavity preferably has a sufficient vertical distance to the rail system to not block the motion of the vehicle on the rail system. The cavity may have a size that is sufficient to receive at least one stacker frame, while being able to horizontally move the stacker frame inside the cavity. Preferably, the cavity is dimensioned to correspond to a plurality of stacker frames in a side-by-side arrangement..

The stacker frame lifter is arranged in the cavity, preferably in a top region of the cavity. It may lower a stacker frame gripper from the top region into a storage column beneath the vehicle to engage a stacker frame in a storage column and to lift the stacker frame into the cavity by lifting the stacker frame gripper back to the top region. The stacker frame remains inside the cavity by being held by the stacker frame lifter.

The stacker frame lifter displacement device allows to move a stacker frame lifter in a horizontal direction within the cavity. This may allow lifting of stacker frames from a first storage column into the cavity, to move the stacker frame lifter horizontally to a position above a second storage column and to lower the stacker frame into the second storage column. As described further below, the cavity may comprise a support surface, onto which a stacker frame may temporarily be placed.

The vehicle may comprise a support surface inside the cavity configured to support a stacker frame, wherein the stacker frame lifter displacement device is configured to move the stacker frame lifter holding a stacker frame above the support surface. The support surface allows to place a stacker frame inside the cavity, without requiring the stacker frame lifter to be coupled with it. Hence, the vehicle allows to temporarily hold a stacker frame not only with the stacker frame lifter, but also with the support surface. The stacker frame lifter may thus lift one stacker frame from a storage column, be moved horizontally above the support surface, lower the stacker frame onto the support surface, disengage the stacker frame lifter from the stacker frame, be moved horizontally again and retrieve a further stacker frame from a storage column. When a plurality of support surfaces is present, a plurality of stacker frames may be temporarily held inside the vehicle.

The vehicle body may have a footprint that corresponds to the footprint of a group of at least two grid cells. The grid cells may preferably be arranged side by side, in one or more rows. The footprint of the vehicle may be divided in sections ideationally. The sections of the footprint of the vehicle may be utilized differently. For example, a part of the sections may comprise a support surface. Another part may be substantially empty. The stacker frame lifter displacement device may extend above all sections.

The vehicle may comprise a plurality of stacker frame lifters. The vehicle may thus be capable of lifting a plurality of stacker frames consecutively and/or simultaneously. The stacker frames lifted by the plurality of stacker frame lifters may be held in the cavity when the vehicle is moving. A part of or all of the stacker frame lifters may be movable by the stacker frame lifter displacement device.

The number of stacker frame lifters may be lower than the number of grid cells of said group of grid cells. Thus, it is possible to move the stacker frame lifters and thus the lifted stacker frames inside the cavity in a horizontal direction without impacting each other.

The stacker frame lifter displacement device may be configured to move a stacker frame in the first direction X and/or in the second direction Y. Thereby, the stacker frame lifter may be placed above different storage columns, while the vehicle maintains its position.

The support surface may be fixedly attached to the vehicle body. Thereby, the support surface remains in a fixed position.

The support surface may have a footprint that at least corresponds to the footprint of one stacker frame or a plurality of stacker frames. The support surface may be slightly larger than that to ensure a full contact of the stacker frame with the support surface.

The stacker frame lifter displacement device may comprise a support rail system arranged at a top portion of the cavity, the support rail system having a support rail and a support rail carriage coupled with the support rail and configured to move along the support rail. The support rail may be arranged parallel to one of the rails, i.e. along the X or the Y direction stated above. It is preferable to use two parallel support rails spaced apart from each other.

The at least one support surface may have an indentation having a footprint corresponding to the footprint of a stacker frame and being configured to receive a stacker frame. The indentation secures a stacker frame in a horizontal direction, as a bottom edge of the stacker frame is in lateral contact with delimiting edges of the indentation.

The support surface may comprise a vertical abutment surface at an edge region configured to stabilize a stacker frame placed on the support surface against movement in a horizontal direction. The vertical abutment surface does not necessarily extend along complete edges of the support surface. Instead, a plurality of small tabs may surround a main region of the support surface to provide the stabilizing function.

The vehicle may be configured to move stacker frames with a height of at least 66 cm.

According to a second aspect, there is provided an assembly comprising a stacker frame and a vehicle as described above, the stacker frame comprising side walls, a base, an open top end, and an interior space configured to accommodate a plurality of storage containers stored one on top of another in a vertical stack, and wherein the stacker frame is configured to be engaged by the stacker frame lifter.

According to a third aspect, there is provided an automated storage and retrieval system, comprising a rail system comprising a first set of parallel rails arranged in a horizontal plane and extending in a first direction and a second set of parallel rails arranged in the horizontal plane and extending in a second direction which is orthogonal to the first direction, the first and second sets of rails forming a grid pattern in the horizontal plane comprising a plurality of adjacent grid cells, each comprising a grid opening defined by a pair of neighboring rails of the first set of rails and a pair of neighboring rails of the second set of rails, a plurality of storage columns, each located vertically below a grid opening, a plurality of stacker frames configured to be stored in the storage columns, the stacker frames having side walls, a base, and an open top end, and being configured to accommodate a plurality of storage containers stored one on top of another in a vertical stack in an interior space of the respective stacker frame, and a vehicle as described above.

The vehicle may comprise a plurality of stacker frame lifters, and the number of stacker frame lifters may be lower than the number of grid cells of said group of grid cells.

The vehicle body may have a footprint that corresponds to an array of grid cells, the dimensions of the array corresponding to a number of 1 to 5 elements in a first direction and 2 to 5 in a second direction.

According to a fourth aspect, there is provided a method for operating a vehicle according for handling a stacker frame according to the above, the stacker frame being configured to be stored in a storage column of an automated storage and retrieval system, the stacker frame having side walls, a base, and an open top end, and being configured to accommodate a plurality of storage containers stored one on top of another in a vertical stack in an interior space of the stacker frame, the method comprising lifting the stacker frame from a storage column of the automated storage and retrieval system into a cavity of the vehicle using a stacker frame lifting device, and displacing the stacker frame lifted into the cavity onto a support surface in the cavity using a stacker frame displacement device.

The method may comprise moving the stacker frame from the support surface using the stacker frame displacement device and lowering the stacker frame into a storage column of the automated storage and retrieval system using the stacker frame lifting device.

### BRIEF DESCRIPTION OF THE DRAWINGS

The following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Fig. 5 shows a prior art storage container.
Fig. 6 shows an automated storage and retrieval system with stacker frames in a perspective view.
Figs. 7a to 7c show stacker frames in a perspective view, a side view and a top view.
Fig. 8 shows a stacker frame with storage containers in a perspective partial sectional view.
Fig. 9a shows a container handling vehicle handling a storage container inside a stacker frame in a perspective view.
Fig. 9b shows a stored stacker frame and a storage container inside the stacker frame in a top view.
Figs. 10 and 11 show a lifting frame engaging a stacker frame in lateral views.
Figs. 12a and 12b show the lifting frame in perspective views.
Figs. 13a to 14b show a lifting frame engaging a storage container in perspective views and top views.
Fig. 15a shows a stacker frame handling vehicle in a lateral view and a perspective view on a rail system of a framework structure with a partly lifted stacker frame in a first horizontal position.
Fig. 15b shows the stacker frame handling vehicle of Fig. 15a without the framework structure.
Figs. 16a and 16b show the interior structure of the stacker frame handling vehicle in a lateral view and a perspective view on a rail system of a framework structure with a partly lifted stacker frame in a first horizontal position.
Figs. 17a and 17b show the interior structure of the stacker frame handling vehicle in a lateral view and a perspective view with a partly lifted stacker frame in a first horizontal position.
Figs. 18a and 18b show the interior structure of the stacker frame handling vehicle in a lateral view and a perspective view on a rail system of a framework structure with a lifted stacker frame in a first horizontal position.
Figs. 19a and 19b show the interior structure of the stacker frame handling vehicle in a lateral view and a perspective view with a partly lifted stacker frame in a second horizontal position.
Fig. 20a and 20b show a vehicle having a footprint corresponding to 2×3 grid cells and the interior structure of such a vehicle with a partly lifted stacker frame.
Fig. 21 shows a lateral view of the vehicle of Fig. 17a with an integrated support surface.

### DETAILED DESCRIPTION

In the following, embodiments of the invention will be discussed in more detail with reference to the appended drawings. It should be understood, however, that the drawings are not intended to limit the invention to the subject-matter depicted in the drawings.

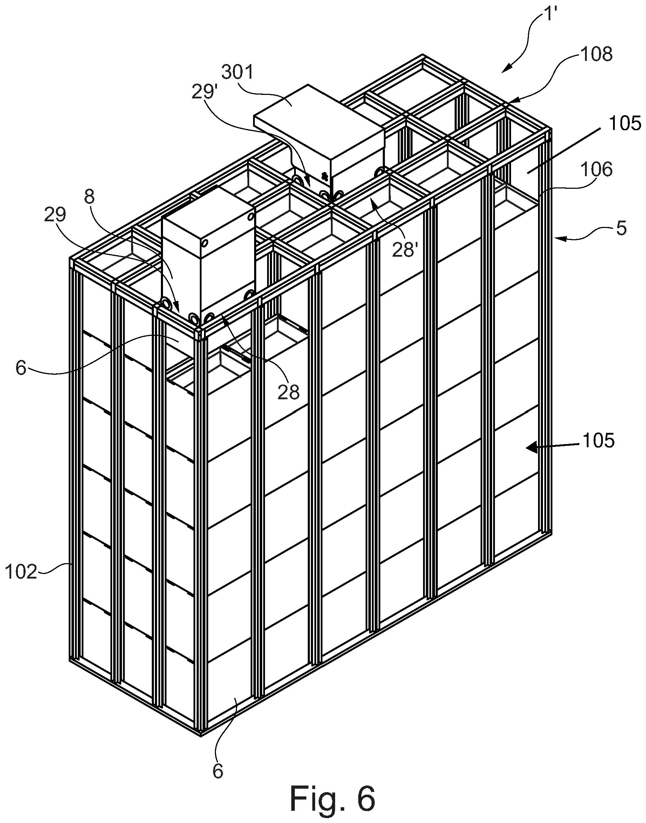

General aspects of automated storage and retrieval systems that use stacker frames 6 are shown in figs. 6 to 14b, in order to explain the particularities of the stacker frames 6. Fig. 6 shows a storage system 1' having a framework structure 100, in which stacker frames 6 are stored. The framework structure 100 may be similar to the framework structure 100 according to the prior art system shown in Fig. 1. At the top of the framework structure 100 a rail system 108 is arranged, on which a container handling vehicle 301 and a stacker frame lifter 8 operate.

The framework structure 100 of the automated storage and retrieval system 1 is constructed in a similar manner to the prior art framework structure 100 described above in connection with Figs. 1-3. That is, the framework structure 100 comprises a number of upright members 102 and comprises a rail system 108 extending in the X direction and Y direction.

The framework structure 100 comprises storage columns 105 provided between the upright members 102 wherein storage containers 106 or, in the illustrated case, stacker frames 6 are stackable in stacks 107 within the storage columns 105.

The framework structure 100 can be of any size. In particular it is understood that the framework structure 100 can be considerably wider and/or longer and/or deeper than disclosed in Fig. 1. For example, the framework structure 100 may have a horizontal extent of more than 700×700 columns and a storage depth of more than twelve containers.

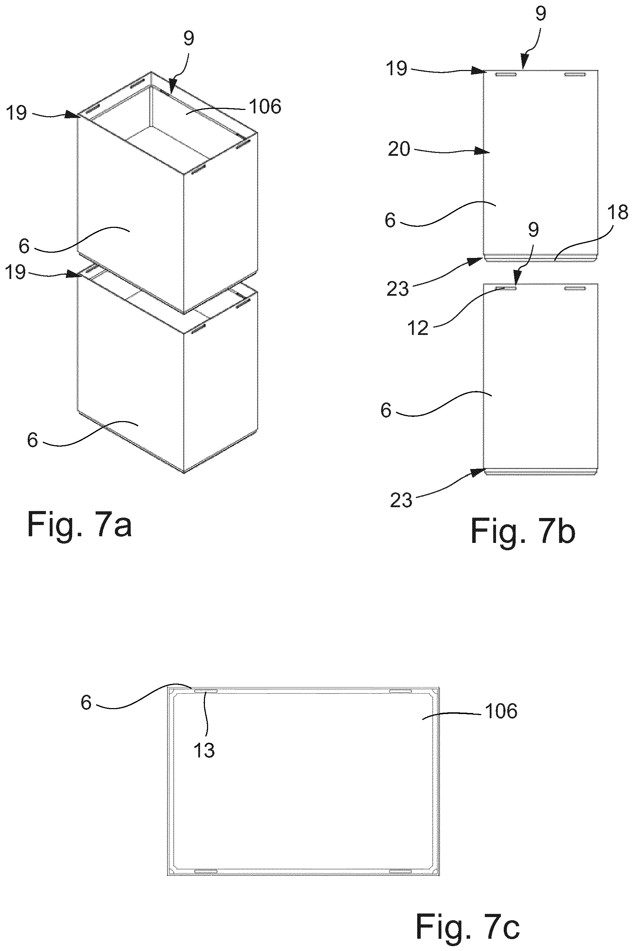

As shown in Figs. 7a to 7c, each of the stacker frames 6 has a top end 9 for allowing a vertical passage of a storage container 106 and is configured to accommodate a plurality of the storage containers 106 stored one on top of another in a vertical stack. The stacker frame 6 is configured to support the bottom of a lowermost storage container 106 in a stack of storage containers 106 accommodated in the stacker frame 6.

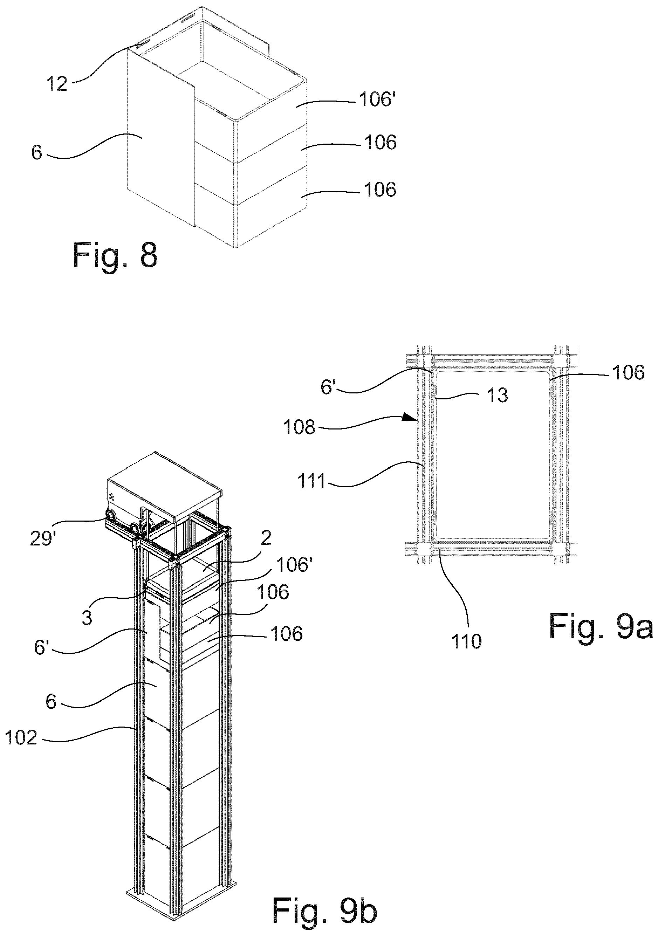

The stacker frame 6, as e.g. illustrated in Figs. 7a, 7b, 7c and 8, comprises a bottom section 18, for supporting a lower end of a stack of storage containers 106, and a top section 19 having the top end 9, through which a storage container 106 may pass in a vertical direction. Side walls 20 extend between the bottom section 18 and the top section 19. Connecting recesses 12 are arranged at an upper portion of opposite side walls 20, which in the shown example are associated with short sides of the stacker frame 6. The connecting recesses 12 are exemplarily arranged at a level above an upper level of a stack of storage containers 106 arranged in the stacker frame 6.

To improve the stability of a stack of stacker frames, the bottom section 18 of the stacker frames 6 may have a recessed portion 23 having an outer periphery being smaller than, i.e. fitting within, an inner periphery of the top section 19. In this manner, the stacker frames 6 may be stacked on top of another while horizontal movement between them is restricted.

The stacker frame lifter 8 and the container handling vehicle 301 are configured to move in two perpendicular directions on the rail system 108. Both the stacker frame lifter 8 and the container handling vehicle 301 comprise a first set of wheels 28, 28' and a second set of wheels 29, 29' for moving on the rail system 108. The sets of wheels may be as described for the prior art container handling vehicles in Figs. 2-4.

The container handling vehicle 301 may be similar to the prior art container handling vehicle 301. The container handling vehicle 301 may comprise a first type of lifting frame 2 having grippers 3, which is shown in Figs. 9b. The grippers 3 may be configured to releasably engage container connecting recesses 13. Exemplarily, the container connecting recesses 13 are arranged in an upper rim 16 of a storage container 106 as illustrated in Fig. 9a. The first type of lifting frame 2 may be similar to the prior art lifting frame shown in Fig. 4.

The container handling vehicle 301 is configured to retrieve a storage container 106 via an open top end 9 of an upper stacker frame 6' of a stack of stacker frames 6, see for example Fig. 9a. The upper stacker frame 6' in Fig. 8 has a cut-away section to better illustrate the stacking of the storage containers 106 inside the stacker frame 6', which is also shown in Fig. 8.

To retrieve a storage container 106 from a stacker frame 6, the first type of lifting frame 2 has an outer periphery being smaller than an inner periphery of the stacker frame 6. The inner periphery of the stacker frame 6 may be configured to guide the vertical movement of the first type of lifting frame 2 within the stacker frame 6.

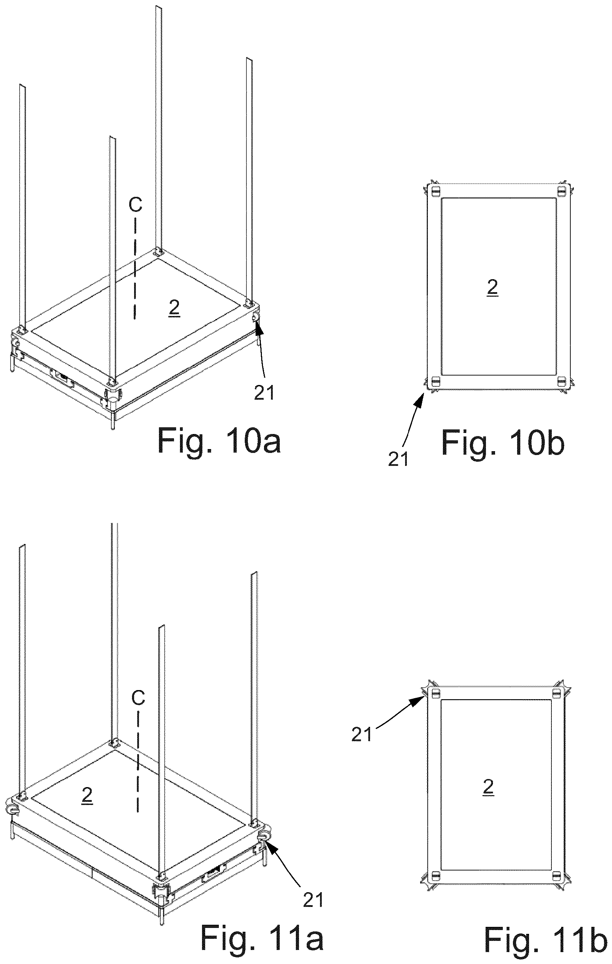

To provide guidance of the first type of lifting frame 2, independent of the stacker frames 6, when moving inside a storage column 105, the lifting frame 2 may optionally comprise extendable guiding elements 21, as illustrated in Figs. 10a, 10b, 11a and 11b. The guiding elements 21 are exemplarily biased towards an extended position, as shown in Figs. 11a and 11b, in which they may interact with vertical column profiles 102 of a storage column 105 to provide guidance of the lifting frame 2. When entering the open end 9 of a stacker frame 6, the guiding elements 21 are forced into a retracted position and further vertical movement of the lifting frame 2 is guided by interaction with internal surfaces of the stacker frame 6. The guiding element 21 may e.g. comprise an arm configured to move a wheel between the extended and the retracted position.

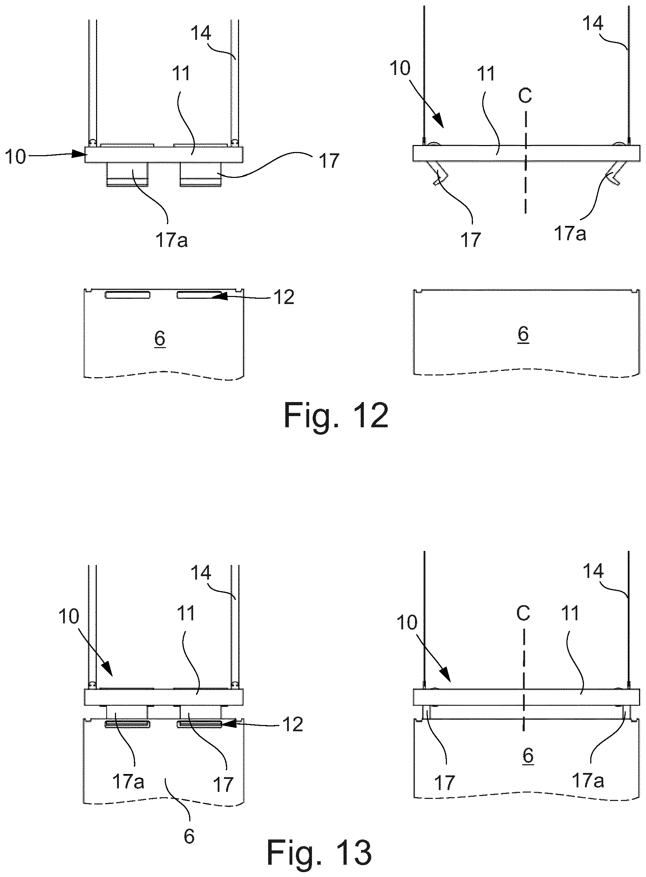

The container handling vehicle 301 mentioned above may be used in addition to stacker frame lifters 8, such that the system 1' is able to handle both the storage containers 106 and the stacker frames 6. According to the invention, vehicles for handling stacker frames are introduced that have a further freedom of motion for moving stacker frames 6. Figs. 12 to 20b show certain features and exemplary embodiments of these vehicles.

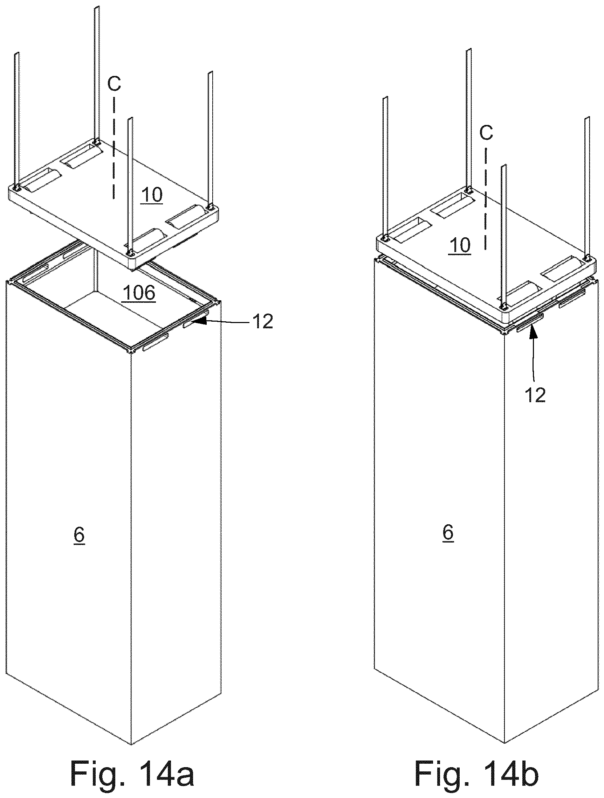

Figs. 12, 13, 14a and 14b show a second type of lifting frame 10, which is configured to engage a stacker frame 6 for lifting or lowering the stacker frame 6 in a storage column 105. The second type of lifting frame 10 is connected to lifting bands 14, which are windable/winchable on or off at least one lifting shaft (not shown herein) to lift or lower the second type of lifting frame 10. The second type of lifting frame 10 exemplarily comprises a horizontal base frame 11 and latches 17 arranged at each of two opposite sides of the base frame 10. A connecting portion 17a of each latch 17 is configured to move between a release position, as shown in Figs. 12 and 14a, and a connecting position, as shown in Figs. 13 and 14b. In the release position the connecting portion 17a is closer to a vertical centerline C of the base frame 10 than in the connecting position. When moving from the release position to the connecting position, the connecting portion 17a is moved away from the vertical centerline C and may extend through a corresponding recess 12 in the side wall 20 of a stacker frame 6. The movement of the latches 17 only within the interior space of the stacker frame 6 is particularly advantageous, as the distance between adjacent stacks of stacker frames 6 can be minimized. Further, the width of the side walls 20 of the stacker frames 6 may also be reduced, as long as the stacker frames 6 are made with a material and/or have a configuration providing sufficient support for the stacker frames 6 stacked above. To provide an increased lifting height, the second type of lifting frame 10 may be further modified, for example by having a guide shuttle as described in WO 2020/200631 A1.

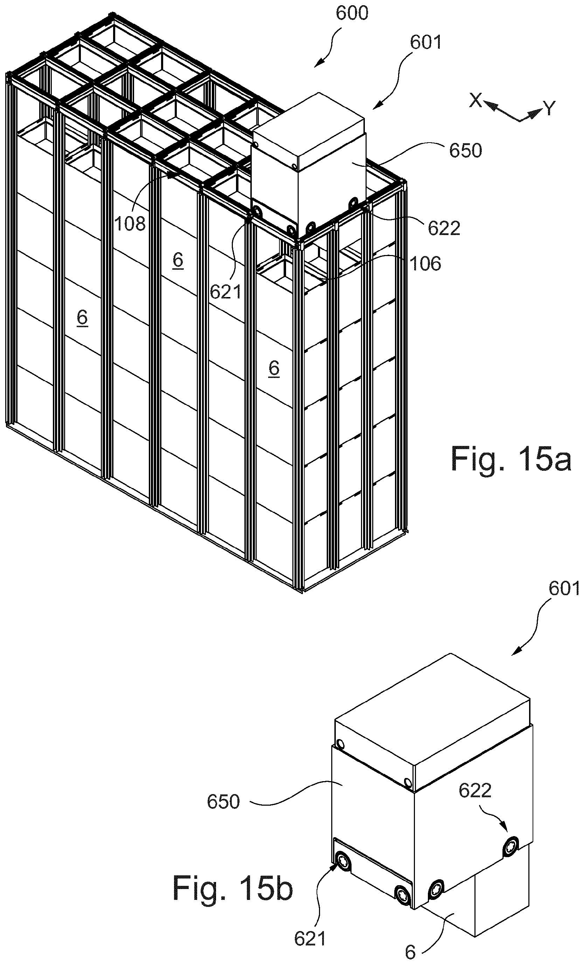

Fig. 15a shows an automated storage and retrieval system 600 in a perspective view. Here, a framework structure 100 having a rail system 108 and forming a plurality of storage columns 105 is shown. This may be done in a similar or identical manner as shown in the previous figures. A plurality of stacker frames 6 is stored in the storage columns 105.

A vehicle 601 is arranged on the rail system 108 and holds one of the stacker frames 6. In this illustration, it lifts or lowers the stacker frame 6 from or into the respective storage column 105. The vehicle 601 exemplarily has a footprint that corresponds to two grid cells 122 or two storage columns 105, respectively.

The vehicle 601 comprises a first set of wheels 621 and a second set of wheels 622 at a lower side of a vehicle body 650. The first set of wheels 621 is arranged at first opposite sides of the vehicle body 650 for moving the vehicle 601 in the first direction X. The second set of wheels 622 is arranged at second opposite sides of the vehicle body 650, for moving the vehicle in the second direction Y, orthogonal to the first direction X. In this exemplary embodiment, the first set of wheels 621 is displaceable in a vertical direction Z between a first position, in which the first set of wheels 621 allows movement of the vehicle 601 in the first direction X, and a second position, in which the second set of wheels 622 allows movement of the vehicle 601 in the second direction Y.

Fig. 15b shows the vehicle 601 in an isolated perspective view, without the framework structure 100 and without the rail system 108. As the stacker frame 6 held by the vehicle 601 is in the process of being lifted or lowered, it sticks out of an underside of the vehicle body 650.

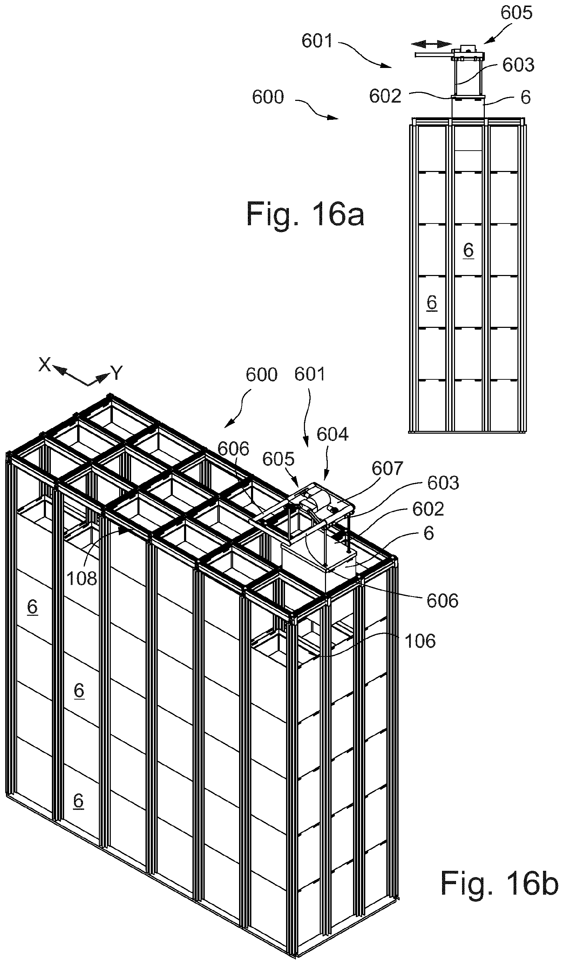

Figs. 16 a and 16b show the automated storage and retrieval system 600 in a lateral view and a perspective view. In these illustrations, only the internal structure of the vehicle 601 is shown to illustrate the working principle.

The vehicle 601 has a stacker frame gripper 602 that engages a stacker frame 6. The stacker frame gripper 602 is attached to four lifting bands 603 and is only partially lifted. The lifting bands 603 are part of a stacker frame lifter 604.

The stacker frame lifter 604 is coupled with a stacker frame lifter displacement device 605, which is configured to move the stacker frame lifter 604 in a horizontal direction, i.e. along at least one of the axes X and Y. In this exemplary embodiment, the stacker frame lifter displacement device 605 comprises two parallel support rails 606, which are arranged parallel to the Y axis, along which a carriage 607 that carries the stacker frame lifter 604 can slide. For actively moving the carriage 607 along the support rails 606, the carriage 607 has an arrangement of two bushings 608 that snugly fit onto the support rails 606. Each of the bushings 608 has a cutout 609. At each bushing 608, a circumferential surface of a drive wheel 610 reaches from an interior side of the carriage 607 through the cutout 609 onto the support rail 606. They may press onto an outer surface of the respective support rail 606. The drive wheel 610 is coupled with a shaft of a drive motor 612, which is attached to the carriage 607. Between the shaft and the respective drive wheel 610, a gear 611 may be arranged. By operating the drive motors 612, the drive wheels 610 are rotated and thus the carriage 607 moves along the support rails 606. The motion direction of the carriage 607 depends on the direction of rotation of the drive wheels 610. It is preferred to self-lock the drive wheels 610 by a gear between the drive wheel 610 and the drive motor 612, by the drive motor 612 itself or by a lock coupled with the drive wheels 610 to maintain the position of the carriage 607 along the support rails 606.

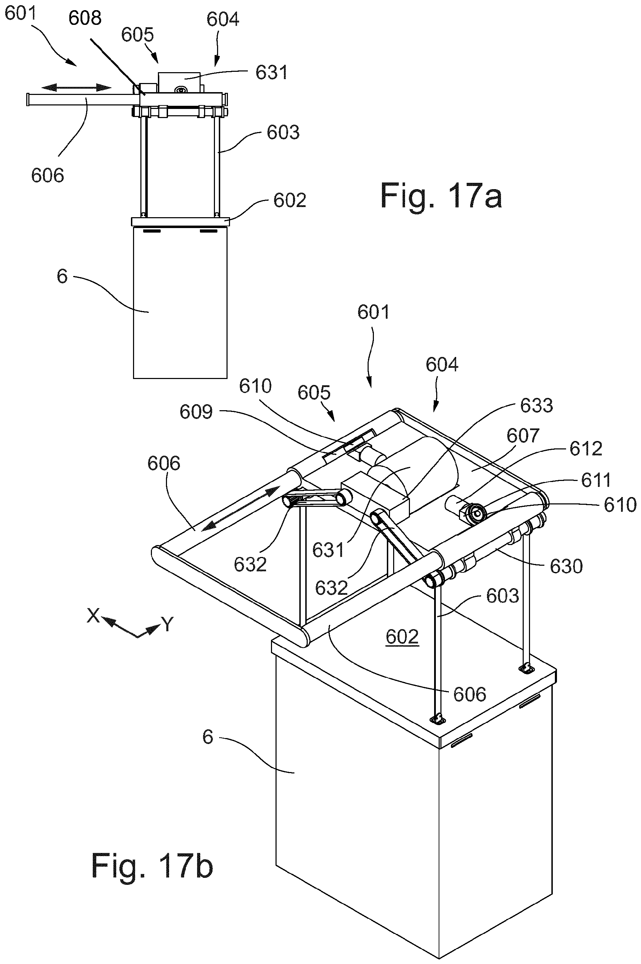

In figs. 17a and 17b, the structure of the vehicle 601 is shown in more detail. The stacker frame lifter 604 exemplarily comprises two parallel lifting shafts 630 that are spaced apart from each other and extend parallel to the two support rails 606. The lifting shafts 630 are configured to wind up or unwind the lifting bands 603 and are coupled with a lifting motor 631 through a belt 632 each. By rotating the motor 631, the belts 632 are driven through a gear 633, wherein the belts 632 drive the lifting shafts 630 to wind up or unwind the lifting bands 603. Thereby, the stacker frame gripper 602 and the stacker frame 6 coupled therewith is lifted or lowered.

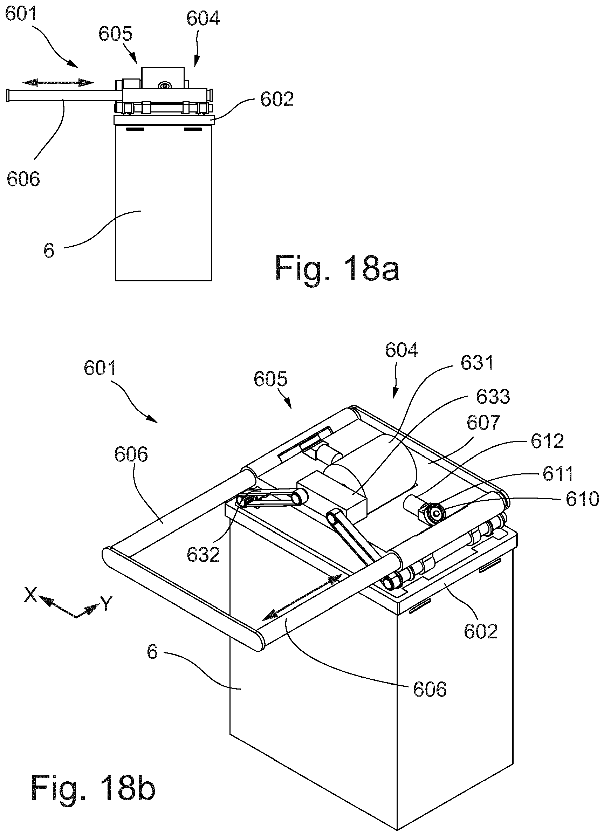

Figs. 18a and 18b show the stacker frame gripper 602 and the stacker frame 6 coupled therewith in an uppermost position, when the lifting bands 603 are completely wound up. In this position, the stacker frame lifter displacement device 605 can be moved horizontally, as the stacker frame 6 is lifted above the rail system 108 and thus does not collide with the rails.

It is preferred to move the stacker frame 6 inside the vehicle 601 when both sets of wheels 621 and 622 are in contact with the rails 110, 111 of the rail system 108.

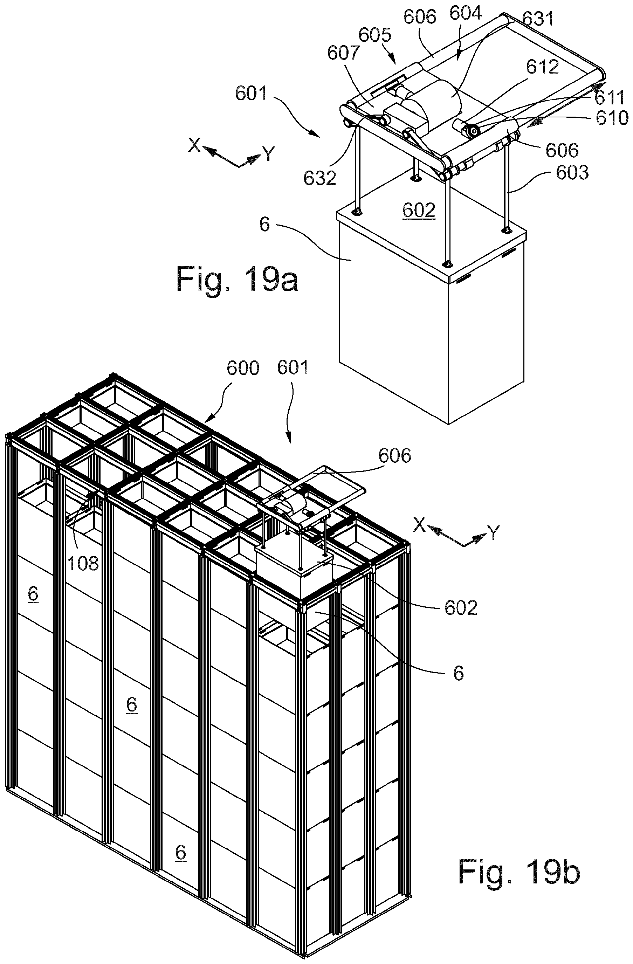

Figs. 19a and 19b show the stacker frame lifter 604 being moved along the Y axis to another side of the vehicle 601, i.e. above another storage column 105. The stacker frame 6 is exemplarily shown in the process of being lowered into the respective storage column 105. This process can be done with the vehicle 601 remaining stationary above both storage columns 105 mentioned before.

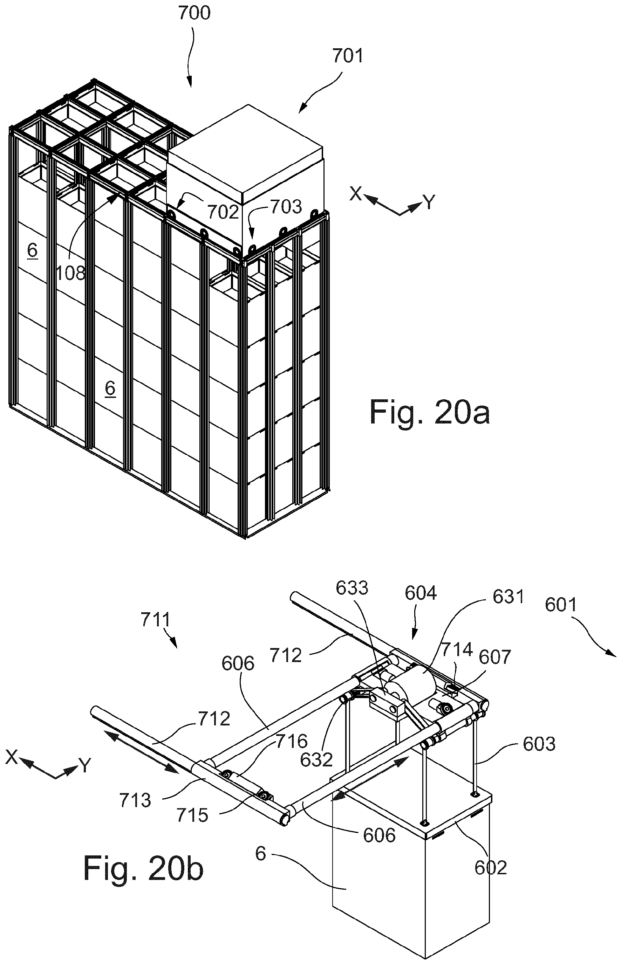

Figs. 20a and 20b illustrate an automated storage and retrieval system 700 having a vehicle 701 comprising a footprint that corresponds to 2×3 grid cells 122. It has a first set of wheels 702 and a second set of wheels 703. The first set of wheels 702 is displaceable in a vertical direction Z between a first position, in which the first set of wheels 702 allows movement of the vehicle 701 in the first direction X, and a second position, in which the second set of wheels 703 allows movement of the vehicle 701 in the second direction Y. Due to the size of the vehicle 701, the first set of wheels 702 and the second set of wheels 703 each have more than just two pairs of wheels on opposite sides of the vehicle 701, in order to provide a sufficient stability and support on the rail system 108.

The vehicle 701 has a stacker frame lifter displacement device 711, which is configured to move the stacker frame lifter 604 in two horizontal directions, i.e. along the X and the Y direction. The stacker frame lifter displacement device 711 has a pair of first support rails 606 arranged parallel to each other, wherein the carriage 607 can be moved along the first support rails 606 in the same way as shown in Figs. 17b before, i.e. in the X direction. To provide a movability along the Y direction, a pair of second support rails 712 is provided, which are parallel to the X direction and allow a movability along the X direction. The first support rails 606 are attached to a pair of second bushings 713, which snugly fit onto the second support rails 712. They are configured to slide along the second support rails 712, i.e. along the X direction. The second bushings 713 have a cutout 714, through which second drive wheels 715 can reach to come into contact with the second support rails 712. The second drive wheels 715 are coupled with second drive motors 716. When operating the second drive motors 716, the whole arrangement of second bushings 713, first support rails 606, and the carriage 607 slidably arranged on the first support rails 606 can be moved along the X direction. This allows the vehicle 701 to move a stacker frame lifter 604 with or without holding a stacker frame 6 in two directions.

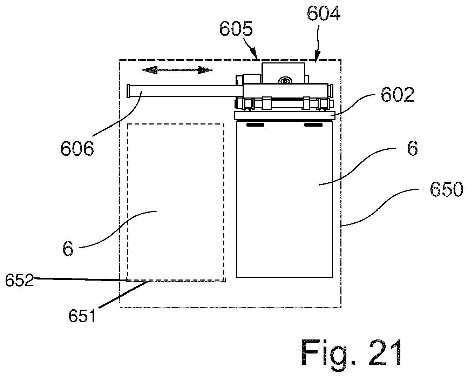

Fig. 21 shows the vehicle 601 in a lateral view. Here, the vehicle body 650 is indicated with dashed lines. Inside the vehicle body 650, a support surface 651 is arranged and fixedly attached to the vehicle body 650. The support surface is configured to receive a stacker frame 6. The position of the support surface 651 is chosen to avoid a contact with the rail system 108 but to still allow to move the lifted stacker frame 6 onto the support surface 651. To stabilize the stacker frame 6 on the support surface 651 against movement in a horizontal direction, the support surface 651 may have an indentation with a footprint corresponding to the footprint of a stacker frame 6 or it may have a vertical abutment surface 652 at an edge region.

With a larger size of the vehicle 601 or 701, more than just one support surface 651 may be placed inside the vehicle body 650. The support surface 651 serves for temporarily holding a stacker frame 6 inside the vehicle 601 or 701. The stacker frame lifter 604 may lift one stacker frame 6 from a storage column 105, move it onto the support surface 651 and continue to retrieve a subsequent stacker frame 6 from the storage column 105.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMBERS

- 1: Prior art automated storage and retrieval system
- 1': Automated storage and retrieval system
- 2: lifting frame
- 3: grippers
- 6: stacker frame
- 6': upper stacker frame
- 8: stacker frame lifter
- 9: top end
- 10: lifting frame
- 11: horizontal base frame
- 12: connecting recess
- 13: container connecting recess
- 14: lifting band
- 16: upper rim
- 17: latch
- 17a: connecting portion
- 18: bottom section
- 19: top section
- 20: side wall
- 23: recessed portion
- 28: wheel
- 28': wheel
- 29: wheel
- 29': wheel
- 105: Storage column
- 105a: first storage column
- 105b: second storage column
- 108: rail system
- 110: Rail
- 111: Rail
- 122: grid cell opening
- 404d: Lifting frame
- 500: Control system
- 600: automated storage and retrieval system
- 601: vehicle
- 602: stacker frame gripper
- 603: lifting bands
- 604: stacker frame lifter
- 605: stacker frame lifter displacement device
- 606: support rail
- 607: carriage
- 608: bushing
- 609: cutout
- 610: drive wheel
- 611: gear
- 612: drive motor
- 621: first set of wheels
- 622: second set of wheels
- 630: lifting shafts
- 631: lifting motor
- 632: belt
- 633: gear
- 650: vehicle body
- 651: support surface
- 652: vertical abutment surface
- 700: retrieval system
- 701: vehicle
- 702: wheels
- 703: wheels
- 711: stacker frame lifter displacement device
- 712: second support rails
- 713: second bushings
- 714: cutout
- 715: second drive wheels
- 716: second drive motors
- *X*: First direction
- *Y*: Second direction
- *Z*: Third direction

## Claims

1. A vehicle (601, 701) for handling stacker frames (6) which frames are configured to be stored in storage columns (105) of an automated storage and retrieval system (600), the stacker frames (6) configured to accommodate a plurality of storage containers (106) stored one on top of another in a vertical stack in an interior space of the stacker frame (6),
the stacker frame handling vehicle (601, 701) comprising:
- wheels for moving the vehicle,
- a cavity inside the vehicle body (650),
- a stacker frame lifter (604) arranged in the cavity and configured to lift a stacker frame (6) into and out of the cavity, and
- a stacker frame lifter displacement device (605) configured to move the stacker frame lifter (604) in a horizontal direction within the cavity.

2. A vehicle (601, 701) according to claim 1,
comprising a support surface (651) inside the cavity configured to support a stacker frame (6),
wherein the stacker frame lifter displacement device (605) is configured to move the stacker frame lifter (604) holding a stacker frame (6) above the support surface (651).

3. The vehicle (601, 701) according to claim 2,
wherein the support surface (651) is fixedly attached to the vehicle body (650).

4. A vehicle (601, 701) according to claim 2 or 3,
wherein the support surface (651) has a footprint that at least corresponds to the footprint of one stacker frame (6) or a plurality of stacker frames (6).

5. A vehicle (601, 701) according to any of claims 2 to 4,
wherein the at least one support surface (651) has an indentation having a footprint corresponding to the footprint of a stacker frame (6) and being configured to receive a stacker frame (6).

6. A vehicle (601, 701) according to any of claims 2 to 5,
wherein the support surface (651) comprises a vertical abutment surface (652) at an edge region configured to stabilize a stacker frame (6) placed on the support surface (651) against movement in a horizontal direction.

7. A vehicle (601, 701) according to any of the preceding claims,
wherein the vehicle body (650) has a footprint that corresponds to the footprint of a group of at least two grid cells (122) of the automated storage and retrieval system.

8. A vehicle (601, 701) according to any of the preceding claims, comprising a plurality of stacker frame lifters (604).

9. A vehicle (601, 701) according to any of the preceding claims,
wherein the number of stacker frame lifters (604) is less than the number of grid cells (122) of said group of grid cells (122).

10. A vehicle (601, 701) according to any of the preceding claims,
wherein the stacker frame lifter displacement device (605) is configured to move a stacker frame (6) in the first direction (X) and/or in the second direction (Y).

11. A vehicle (601, 701) according to any of the preceding claims,
wherein the stacker frame lifter displacement device (605) comprises a support rail system arranged at a top portion of the cavity, the support rail system having a support rail (606, 712) and a support rail carriage (607) coupled with the support rail (606, 712) and configured to move along the support rail (606, 712).

12. An assembly comprising a stacker frame (6) and a vehicle (601, 701) as claimed in any of claims 1 to 11, the stacker frame (6) comprising side walls, a base, an open top end, and an interior space configured to accommodate a plurality of storage containers stored one on top of another in a vertical stack, and wherein the stacker frame (6) is configured to be engaged by the stacker frame lifter (604).

13. An automated storage and retrieval system (1), comprising:
- a rail system (108) comprising a first set of parallel rails (110) arranged in a horizontal plane (P) and extending in a first direction (X) and a second set of parallel rails (111) arranged in the horizontal plane (P) and extending in a second direction (Y) which is orthogonal to the first direction (X), the first and second sets of rails (110, 111) forming a grid pattern in the horizontal plane (P) comprising a plurality of adjacent grid cells (122), each comprising a grid opening (115) defined by a pair of neighboring rails (l10a, llob) of the first set of rails (110) and a pair of neighboring rails (11la, 11lb) of the second set of rails (111),
- a plurality of storage columns, each located vertically below a grid opening (115),
- a plurality of stacker frames (6) configured to be stored in the storage columns, the stacker frames (6) having side walls, a base, and an open top end, and being configured to accommodate a plurality of storage containers stored one on top of another in a vertical stack in an interior space of the respective stacker frame (6), and
- a vehicle (601, 701) as claimed in any of the claims 1 to 12.

14. A method for operating a vehicle (601, 701) for handling a stacker frame (6) according to any of claims 1 to 11,
the stacker frame (6) being configured to be stored in a storage column of an automated storage and retrieval system, the stacker frame (6) having side walls, a base, and an open top end, and being configured to accommodate a plurality of storage containers stored one on top of another in a vertical stack in an interior space of the stacker frame (6),
the method comprising:
- lifting the stacker frame (6) from a storage column of the automated storage and retrieval system into a cavity of the vehicle (601, 701) using a stacker frame lifting device, and
- displacing the stacker frame (6) lifted into the cavity onto a support surface in the cavity using a stacker frame displacement device.

15. A Method according to claim 14,
the method comprising:
- moving the stacker frame (6) from the support surface using the stacker frame displacement device, and
- lowering the stacker frame (6) into a storage column of the automated storage and retrieval system using the stacker frame lifting device.
